# EUROPEAN PATENT APPLICATION

(11) **EP 4 579 788 A1**
(43) Date of publication of application: **02.07.2025**
(21) Application number: 24222643.9
(22) Date of filing: 20.12.2024
(51) Int. Cl.: H01M 4/131, H01M 4/525, H01M 4/62, H01M 10/0525

(54) **LITHIUM REPLENISHMENT ASSEMBLY, POSITIVE ELECTRODE, SECONDARY BATTERY, AND ELECTRONIC DEVICE**

(30) Priority: 28.12.2023 CN 202311862222
(71) Applicant: BYD Company Limited, Shenzhen, Guangdong 518118 (CN)
(72) Inventor: QIU, Zhaozheng, Shenzhen, 518118 (CN); LIU, Zhengjiao, Shenzhen, 518118 (CN); PAN, Yi, Shenzhen, 518118 (CN)
(74) Representative: Taor, Simon Edward William

(57) **Abstract**

The present disclosure provides a lithium replenishment assembly, a positive electrode, a secondary battery, and an electric device. The lithium replenishment assembly includes a current collector and a lithium replenishment layer provided on at least one side surface of the current collector. After delithiation of the lithium replenishment layer, the resistivity of the lithium replenishment assembly at the room temperature ranges from 2 Ω·m to 2000 Ω·m. It has a lithium replenishment effect and maintains low resistivity after delithiation of the lithium replenishment layer, thereby increasing the energy density of the battery while enabling good rate performance of the battery.

## Description

### FIELD

The present disclosure relates to the technical field of batteries, and specifically to a lithium replenishment assembly, a positive electrode, a secondary battery, and an electric device.

### BACKGROUND

The lithium replenishment technique is an effective means for effectively enhancing the energy density of a battery while improving the cycle life and storage performance of the battery. Positive electrode lithium replenishment attracts great attention due to its advantages of stability, low cost, easy composition, and the like. If a positive electrode lithium replenishment agent is directly mixed into a positive electrode material layer, a residue resulting from release of active lithium ions from the positive electrode lithium replenishment agent affects the ion transport, or alternatively, gas production during decomposition of the lithium replenishment agent affects the structural stability of the active material layer, which has negative effects on subsequent exertion of performance of the battery. If a separate lithium replenishment layer is provided in the positive electrode, the positive electrode lithium replenishment agent still has high resistivity after delithiation, which affects the electron transport efficiency of the current path in the battery, which has negative effects on the rate performance of the battery. In addition, as the lithium replenishment layer has high resistivity after delithiation, it is further required to apply a conductive carbon layer on the surface of the current collector to improve the electronic conductivity of the electrode sheet, which not only increases the cost, but also affects the energy density of the battery.

### SUMMARY

In view of this, an embodiment of the present disclosure provides a lithium replenishment assembly, a positive electrode, a secondary battery, and an electric device that have a lithium replenishment effect and maintains low resistivity after delithiation of the lithium replenishment layer, thereby increasing the energy density of the battery while enabling good rate performance of the battery.

In a first aspect, an embodiment of the present disclosure provides a lithium replenishment assembly which includes a current collector and a lithium replenishment layer provided on at least one side surface of the current collector. After delithiation of the lithium replenishment layer, the resistivity of the lithium replenishment assembly at the room temperature ranges from 2 Ω·m to 2000 Ω·m.

The lithium replenishment assembly still has good electron conductivity after delithiation, and ion transport is facilitated, thereby supporting sufficient exertion of the performance, particularly the rate performance, of the electrode sheet during the charging and discharging cycle of the battery. Also, the lithium replenishment layer in said lithium replenishment assembly has a lithium replenishment effect, which can increase the energy density and cycle life of the battery.

Optionally, the resistivity of the lithium replenishment assembly after delithiation at the room temperature ranges from 2 Ω·m to 1000 Ω·m.

Optionally, the thickness of the current collector ranges from 7 µm to 20 µm; and a thickness of the lithium replenishment layer ranges from 3 µm to 20 µm.

Optionally, the lithium replenishment layer includes a lithium replenishment agent, a conductive agent, and a binder. The content by weight of the lithium replenishment agent ranges from 50% to 90%, the content by weight of the conductive agent ranges from 1% to 40%, and the content by weight of the binder ranges from 1% to 20%, based on the total weight of the lithium replenishment layer.

Optionally, the lithium replenishment layer includes a lithium replenishment agent and the particle size D50 of the lithium replenishment agent ranges from 0.5 µm to 20 µm.

Optionally, the lithium replenishment layer includes a lithium replenishment agent and the lithium replenishment agent includes at least one LiₓA_{y} and/or lithium oxide, where x>0, 0<y≤3, and the element A includes at least one of C, N, O, P, and S;
the metal oxide of lithium includes at least one of LiM¹O₂, LiM²O₃, LisFeₐM³₁₋ₐO₄, Li₆Mn_{b}M⁴_{1-b}O₄, and Li₅M⁵O₄, where M¹ includes at least one of Ni, Mn, Cu, Fe, Cr, and Mo; M² includes at least one of Ni, Mn, Fe, Mo, Zr, Si, Cu, Cr, and Ru; M³ includes at least one of Al, Nb, Co, Mn, Ni, Mo, Ru, and Cr, and 0≤a≤1; M⁴ includes at least one of Ni, Fe, Cu, and Ru, and 0≤b≤1; and M⁵ includes at least one of Ni, Mn, Fe, Mo, Zr, Si, Cu, and Cr.

Optionally, the lithium replenishment layer includes a conductive agent, and the size of the conductive agent in at least one dimension is less than or equal to 200 nm.

Optionally, the lithium replenishment layer includes a conductive agent, and the conductive agent includes at least one of porous carbon, acetylene black, carbon nanotubes, carbon black, ketjen black, graphene, and Mxenes.

Optionally, the lithium replenishment layer includes a binder, and the binder includes at least one of polyvinylidene fluoride, polyvinyl alcohol, polytetrafluoroethylene, polyethylene, polypropylene, polyacrylonitrile, polyacrylic acid, sodium alginate, and styrene-butadiene rubber.

Optionally, the particle size D50 of the residue of the lithium replenishment agent after delithiation ranges from 0.4 µm to 18 µm.
optionally, the ratio of a total surface area of the conductive agent to that of the lithium replenishment agent is in the range of (0.1-10): 1; and optionally, the ratio of a total surface area of the conductive agent to that of the lithium replenishment agent is (0.5-5):1; and optionally, the ratio of a total surface area of the conductive agent to that of the lithium replenishment agent is (0.8-3): 1.

In a second aspect, an embodiment of the present disclosure further provides a positive electrode which includes the lithium replenishment assembly provided by an embodiment of the present disclosure in the first aspect and a positive electrode material layer, and the positive electrode material layer is provided on a surface of the lithium replenishment layer facing away from the current collector. As the positive electrode of an embodiment of the present disclosure is utilized, the secondary battery can have high energy density, long cycle life, low internal resistance of the battery, as well as good rate performance.

Optionally, the thickness of the lithium replenishment layer ranges from 3 µm to 20 µm; and the thickness of the current collector ranges from 7 µm to 20 µm.

Optionally, the positive electrode material layer includes a positive electrode active material, and the weight ratio of the lithium replenishment agent to the positive electrode active material is in the range of (0.2-10): 100.

In a third aspect, an embodiment of the present disclosure provides a secondary battery which includes the positive electrode provided by an embodiment of the present disclosure in the second aspect.

Optionally, the secondary battery includes a positive electrode sheet, a negative electrode sheet, and an electrolyte and a separator between the positive electrode sheet and the negative electrode sheet.

Optionally, the resistivity of the positive electrode at the room temperature ranges from 1 Ω·m to 100 Ω·m.

In a fourth aspect, the present disclosure provides an electric device which includes the secondary battery provided by the present disclosure in the third aspect. As the electric device is powered by using the secondary battery provided by the embodiment of the present disclosure, the electric device has a long battery life and certain fast charge capability, thereby having good market competitiveness.

Optionally, the electric device includes, but is not limited to, a 3C electronic device, a powered vehicle, an energy storage system, and the like. The powered vehicle includes, but is not limited to, a new energy vehicle, a power-assisted bicycle, and the like.

### DETAILED DESCRIPTION

An embodiment of the present disclosure provides a lithium replenishment assembly which includes a current collector and a lithium replenishment layer provided on at least one side surface of the current collector. After delithiation of the lithium replenishment layer, the resistivity of the lithium replenishment assembly at the room temperature ranges from 2 Ω·m to 2000 Ω·m.

The lithium replenishment assembly provided by the embodiment of the present disclosure has resistivity controlled in the range from 2 Ω·m to 2000 Ω·m after delithiation of the lithium replenishment layer, and has good electron conductivity, thereby supporting sufficient exertion of the performance of the electrode sheet during the charging and discharging cycle of the battery. The lithium replenishment layer in said lithium replenishment assembly has a lithium replenishment effect, which can increase the energy density and cycle life of the battery; and it can act as a conductive layer as well after delithiation. Compared with the battery in related art using an electrode sheet with a lithium replenishment layer, not only the rate performance can be increased, but also it is not required to provide an additional conductive layer on the surface of the current collector (e.g., in place of a carbon coated foil), the energy density of the battery can be increased, and the final electrode sheet is enabled to have sufficiently low resistivity, the internal resistance of the battery is reduced, and exertion of the performance of the battery is facilitated.

In an embodiment of the present disclosure, the lithium replenishment layer may be provided on a single side surface of the current collector, or alternatively on the two opposite side surfaces of the current collector. In an embodiment of the present disclosure, said lithium replenishment assembly may be applied to a positive electrode. In an embodiment of the present disclosure, the current collector in said lithium replenishment assembly may be any current collector for lithium-ion batteries well known in the art. When it is applied to the positive electrode, a current collector applicable to the positive electrode of the lithium secondary battery, such as an aluminum foil, is selected.

In an embodiment of the present disclosure, the room temperature refers to the ambient temperature at which the resistivity is measured. In more cases, the room temperature is in the range of 25±2°C in an embodiment of the present disclosure.

In an embodiment of the present disclosure, the resistivity of the lithium replenishment assembly after delithiation at the room temperature is measured by using the two-electrode method. Specifically, a positive electrode and a negative electrode including the lithium replenishment assembly are assembled into a battery, where the negative electrode includes a current collector (specifically, a copper foil) and a negative electrode material layer provided on the surface of the current collector. The negative electrode material layer is composed of graphite, a conductive agent, and a binder at a weight ratio of 95:3:2. The electrolyte is an organic solution of lithium hexafluorophosphate with a concentration of 1.2mol/L, where the solvent is EC:DMC:EMC at a weight ratio of 1:1:1. The battery is formed in a formation process as follows: The battery was charged at 0.05C for 3 hrs, allowed to stand for 10 min, and charged to 3.8 V at 0.2C. After formation, the battery is discharged to an SOC of 0. The battery is disassembled to get the positive electrode. The positive electrode is placed in the solvent of dimethyl carbonate (DMC) and immersed for 10 min-20 min to remove the positive electrode material (e.g., the positive electrode material layer is removed if the positive electrode includes the lithium replenishment assembly and the positive electrode material layer) so as to obtain the lithium replenishment assembly after delithiation. The resistivity of the lithium replenishment assembly after delithiation is tested as follows: the lithium replenishment assembly after delithiation is placed between the two electrodes, i.e., the upper and lower electrodes (the two surfaces along the thickness of the lithium replenishment assembly after delithiation face the two electrodes directly), a pressure of 25 Mpa and then a certain current are applied to the electrodes, and the voltage across the electrodes is measured, so as to calculate the resistance of the sample. The lithium content of the lithium replenishment agent in the lithium replenishment layer ranges from 10 to 25% of the lithium content in the original lithium replenishment agent. The resistivity of the lithium replenishment assembly after delithiation at the room temperature is obtained. In the present disclosure, the specific method for delithiation of the lithium replenishment layer may also be carried out with reference to the steps of obtaining the delithiated lithium replenishment assembly as described above.

In an embodiment of the present disclosure, after delithiation of the lithium replenishment layer, the resistivity of the lithium replenishment assembly (i.e., the lithium replenishment assembly after delithiation) at the room temperature may be 2 Ω·m, 5 Ω·m, 10 Ω·m, 15 Ω·m, 20 Ω·m, 25 Ω·m, 30 Ω·m, 50 Ω·m, 100 Ω·m, 200 Ω·m, 300 Ω·m, 500 Ω·m, 1000 Ω·m, 1100 Ω·m, 1200 Ω·m, 1300 Ω·m, 1400 Ω·m, 1500 Ω·m, 1800 Ω·m, or 2000 Ω·m. It can be understood that if said resistivity is too high, exertion of performance of the battery is affected. Correspondingly, in this case, the resistivity of said lithium replenishment assembly (i.e., the lithium replenishment assembly before delithiation) at the room temperature ranges from 1 Ω·cm to 500 Ω·cm.

In some embodiments of the present disclosure, after delithiation of the lithium replenishment layer, the resistivity of the lithium replenishment assembly (i.e., the lithium replenishment assembly after delithiation) at the room temperature ranges from 2 Ω·m to 1000 Ω·m. As an example, the resistivity of the lithium replenishment assembly after delithiation at the room temperature may be 2 Ω·m, 10 Ω·m, 100 Ω·m, 200 Ω·m, 300 Ω·m, 400 Ω·m, 500 Ω·m, 600 Ω·m, 700 Ω·m, 800 Ω·m, or 900 Ω·m. This is more beneficial for the rate performance of the battery. Correspondingly, in this case, the resistivity of the lithium replenishment assembly (i.e., the lithium replenishment assembly before delithiation) at the room temperature ranges from 1 Ω·cm to 300 Ω·cm. As an example, the resistivity of the lithium replenishment assembly before delithiation at the room temperature may be 5 Ω·cm, 10 Ω·cm, 20 Ω·cm, 50 Ω·cm, 100 Ω·cm, 150 Ω·cm, 200 Ω·cm, 220 Ω·cm, 250 Ω·cm, 260 Ω·cm, 280 Ω·cm, or 300 Ω·cm.

In some specific embodiments of the present disclosure, after delithiation of the lithium replenishment layer, the resistivity of the lithium replenishment assembly (i.e., the lithium replenishment assembly after delithiation) at the room temperature ranges from 5 Ω·m to 800 Ω·m. As an example, the resistivity of the lithium replenishment assembly after delithiation at the room temperature may be 5 Ω·cm, 10 Ω·cm, 20 Ω·cm, 50 Ω·cm, 100 Ω·cm, 150 Ω·cm, 250 Ω·cm, 350 Ω·cm, 450 Ω·cm, 550 Ω·cm, 650 Ω·cm, or 750 Ω·cm. Correspondingly, in this case, the resistivity of the lithium replenishment assembly (i.e., the lithium replenishment assembly before delithiation) at the room temperature ranges from 2 Ω·cm to 200 Ω·cm. As an example, the resistivity of the lithium replenishment assembly before delithiation at the room temperature may be 2 Ω·cm, 5 Ω·cm, 10 Ω·cm, 15 Ω·cm, 25 Ω·cm, 35 Ω·cm, 55 Ω·cm, 75 Ω·cm, 95 Ω·cm, 105 Ω·cm, 115 Ω·cm, 125 Ω·cm, 135 Ω·cm, 145 Ω·cm, 155 Ω·cm, 165 Ω·cm, 175 Ω·cm, 185Ω·cm, or 195 Ω·cm.

In some embodiments of the present disclosure, the thickness of the lithium replenishment layer ranges from 3 µm to 20 µm. As an example, the thickness of the lithium replenishment layer may be 3 µm, 4 µm, 5 µm, 8 µm, 10 µm, 12 µm, 15 µm, 18 µm, 20 µm, or the like. The thickness of the lithium replenishment layer is controlled within the range mentioned above, so that high energy density of the battery can be ensured. The path of electrons in the current collector and the positive electrode material layer can also be controlled within a suitable range, which is beneficial for the electron transport efficiency in the current path inside the battery. In addition, this allows high mechanical strength of the lithium replenishment assembly. The thickness of the lithium replenishment layer here refers to the status before delithiation.

In some embodiments of the present disclosure, the thickness of the current collector ranges from 7 µm to 20 µm. As an example, the thickness of the current collector may be 7 µm, 8 µm, 10 µm, 12 µm, 15 µm, 18 µm, or 20 µm. As such, the current collector itself has certain mechanical strength to bear the lithium replenishment layer, while the weight of the final lithium replenishment assembly can be controlled within a small range, which is beneficial for the structural stability and energy density of the battery. According to the actual application scenario, the lithium replenishment layer and the current collector may have the same thickness or different thicknesses.

In some embodiments of the present disclosure, the lithium replenishment layer includes a lithium replenishment agent and a conductive agent, and the content by weight of the lithium replenishment agent ranges from 50% to 90% and the content by weight of the conductive agent ranges from 1% to 40% based on the total weight of the lithium replenishment layer. As an example, the content in percent by weight of the lithium replenishment agent in the lithium replenishment layer may be 50%, 55%, 60%, 65%, 70%, 75%, 80%, 85%, or 90%. As an example, the content by weight of the conductive agent in the lithium replenishment layer may be 1%, 2%, 5%, 8%, 10%, 15%, 20%, 25%, 30%, 35%, or 40%. The contents of various components here refer to the status before delithiation. The contents of the lithium replenishment agent and the conductive agent in the lithium replenishment layer are controlled within the range mentioned above, so that the resistivity of the lithium replenishment assembly before/after delithiation can be controlled within a small range, while the lithium replenishment effect can be optimized, thereby further increasing the energy density of the battery.

In some embodiments of the present disclosure, the D50 particle size of the lithium replenishment agent in the lithium replenishment layer ranges from 0.5 µm to 20 µm. As an example, the particle size of the lithium replenishment agent may be 0.5 µm, 1.0 µm, 2.0 µm, 5.0 µm, 8.0 µm, 10.0 µm, 12.0 µm, 15.0 µm, 16 µm, 17 µm, 18 µm, or 19 µm. The D50 particle size of the lithium replenishment agent here refers to the status before delithiation. The particle size of the lithium replenishment agent is controlled within the range mentioned above, which facilitates delithation, ensures good mechanical strength of the lithium replenishment layer, facilitates cladding of the conductive agent, and reduces the resistivity of the lithium replenishment assembly. In addition, considering that the particle size of the lithium replenishment agent after delithiation is reduced due to delithiation or rupture, through control of the particle size within the range mentioned above, the particle size of the residue of the lithium replenishment agent after delithiation has not changed much, which reduces the risk of electron conduction being affected by the gap occurring in the lithium replenishment layer, thereby better reducing the conductivity of the lithium replenishment layer after delithiation, which is beneficial for the rate performance of the battery. In the present disclosure, D50 refers to the particle size when the cumulative particle size distribution percentage of the sample reaches 50%.

To obtain the particle size D50 of lithium replenishment agent, any known method may be used. In the examples discussed in relation to embodiments of the invention, the D50 measurement was carried out by using a laser particle size analyzer, and the specific operation was as follows:
1. Sample preparation: The electrode sheet was washed with the solvent dimethyl carbonate (DMC), and then dried. The lithium replenishment layer was removed by scraping and ultrasonic treatment. Then the lithium replenishment layer was immersed in an organic solvent such as N-Methylpyrrolidone (NMP) to remove the binder. The conductive agent was separated from the lithium replenishment agent by centrifugation, and the delithiated lithium replenishment agent as particles was obtained after repeatedly washing and drying.
2. Sample dispersion: The lithium replenishment agent as particles were added into a dispersing medium, and the sample was fully dispersed by mechanical stirring, ultrasonic shaking at a high frequency and other means to avoid the particle agglomeration.
3. Measurement: The dispersed lithium replenishment agent as particles was introduced into a measurement system. The laser particle size analyzer was used to emit a laser beam to penetrate through the sample, and diffraction occurred when the laser travelled through the sample.
4. Data collection and analysis: The instrument collectted the data of light intensity scattered from various angles, and then calculated the particle size distribution by built-in software according to the Mie theory or other applicable light scattering theories.
5. Result output: After the test, the instrument can provide data such as particle size distribution data table, distribution curve, specific surface area, D10, D50 and D90.

In some embodiments of the present disclosure, the lithium replenishment agent includes, but is not limited to, at least one LiₓA_{y} and/or metal oxide of lithium, where x>0, 0<y≤3, and the element A includes at least one of C, N, O, P, and S; the metal oxide of lithium includes at least one of Li₂M¹O₂, Li₂M²O₃, Li₅FeₐM³₁₋ₐO₄, Li₆Mn_{b}M⁴_{1-b}O₄, and Li₅M⁵O₄, where M¹ includes, but is not limited to, at least one of Ni, Mn, Cu, Fe, Cr, and Mo; M² includes, but is not limited to, at least one of Ni, Mn, Fe, Mo, Zr, Si, Cu, Cr, and Ru; M³ includes at least one of Al, Nb, Co, Mn, Ni, Mo, Ru, and Cr, and 0≤a≤1; M⁴ includes, but is not limited to, at least one of Ni, Fe, Cu, and Ru, and 0≤b≤1; and M⁵ includes, but is not limited to, at least one of Ni, Mn, Fe, Mo, Zr, Si, Cu, and Cr. Said LiₓA_{y} may be, but is not limited to, Li₃N, Li₂C₂, Li₂S, Li₂O, Li₂CO₃, Li₂C₂O₄, and Li₃P etc, and the lithium replenishment agent includes, but is not limited to, a mixture of these materials.

In some specific embodiments, the lithium replenishment agent is selected from the metal oxides of lithium mentioned above. Further, in some specific embodiments, said lithium replenishment agent is selected from a group consisting of at least one of Li₂M¹O₂, Li₂M²O₃, Li₅FeₐM³₁₋ₐO₄, and Li₅M⁵O₄. Said lithium replenishment agent produces no additional gas during delithiation (during battery formation), so that the original structure of the lithium replenishment layer can be preserved (without causing vacancy), the resistivity of the lithium replenishment assembly after delithiation can be further reduced, and the structural stability of the electrode sheet can be maintained as well. Still further, the residue thereof after delithiation still has certain activity, which facilitates transport of active ions (lithium ions) in the battery.

In some embodiments of the present disclosure, the size of the conductive agent in at least one dimension is less than or equal to 200 nm. As an example, the size of the conductive agent in at least one dimension may be 5 nm, 10 nm, 15 nm, 20 nm, 25 nm, 50 nm, 60 nm, 70 nm, 80 nm, 90 nm, 100 nm, 120 nm, 150 nm, 180 nm, or 190 nm. As such, cladding of the conductive agent over the surface of the lithium replenishment agent particle is further facilitated, thereby further reducing the resistivity of the lithium replenishment assembly before/after delithiation.

In some embodiments of the present disclosure, the conductive agent includes, but is not limited to, porous carbon, acetylene black, carbon nanotubes, carbon black (e.g., Super P), ketjen black, graphene, and Mxenes, where porous carbon includes, but is not limited to, at least one of nanoporous carbon and ordered porous carbon. In some specific embodiments, the conductive agent is selected from a group consisting of at least one of porous carbon, Super P, acetylene black, carbon nanotubes, carbon black, ketjen black, graphene, and Mxenes with a size in at least one dimension being less than or equal to 200 nm.

In some embodiments of the present disclosure, the lithium replenishment layer further includes a binder, and the content in percent by weight of the binder in the lithium replenishment layer ranges from 1% to 20%. As an example, the content in percent by weight of the binder in the lithium replenishment layer may be 1.5%, 2.0%, 3.0%, 5.0%, 8.0%, 10.0%, 11.0%, 12.0%, 13.0%, 14.0%, 14.5%, 15.0%, 16.0%, 17.0%, 18.0%, or 19.0%. The binder can maintain the structural stability of the lithium replenishment layer. Besides, when the lithium replenishment assembly is applied to an electrode sheet, an appropriate amount of binder in the lithium replenishment layer can also increase the strength of binding between the active material layer (e.g., the positive electrode material layer) and the current collector, thereby further ensuring improvement in the rate performance and cycle life of the battery.

In some embodiments of the present disclosure, the binder includes but is not limited to at least one of polyvinylidene fluoride, polyvinyl alcohol, polytetrafluoroethylene, polyethylene, polypropylene, polyacrylonitrile, polyacrylic acid, sodium alginate, and styrene-butadiene rubber. Said binder has good binding power, which can increase the structural stability of the lithium replenishment layer itself as well as the structural stability of the final electrode sheet.

In some embodiments of the present disclosure, the lithium replenishment layer includes a lithium replenishment agent, a conductive agent, and a binder, and the content by weight of the lithium replenishment agent ranges from 50% to 90% and the content by weight of the conductive agent ranges from 1% to 40%, and the content by weight of the binder ranges from 1% to 20%, based on the total weight of the lithium replenishment layer.

In some embodiments of the present disclosure, the lithium replenishment material layer further includes a dispersant. An appropriate amount of dispersant facilitates dispersion of the conductive agent, which can further reduce the conductivity of the lithium replenishment assembly before/after delithiation. In some specific embodiments, the weight of the dispersant ranges from 5% to 60% of that of the conductive agent. As an example, the weight of the dispersant is 5%, 10%, 15%, 20%, 25%, 30%, 35%, 40%, 45%, 50%, or 55% of that of the conductive agent.

In some embodiments of the present disclosure, said dispersant includes but is not limited to at least one of polyvinylpyrrolidone (PVP), sodium dodecyl sulfate (SDS), a perfluoroalkyl ether alcohol amine salt, a perfluoroalkyl ether quaternary ammonium salt, cetyltrimethyl ammonium bromide (CTAB), dodecyl trimethyl ammonium bromide, and dodecyl pyridinium bromide.

In some embodiments of the present disclosure, the ratio of a total surface area of the conductive agent to that of the lithium replenishment agent is (0.1-10):1. In some embodiments of the present disclosure, the ratio of a total surface area of the conductive agent to that of the lithium replenishment agent is (0.5-5):1. Further, in some specific embodiments, the ratio of a total surface area of the conductive agent to that of the lithium replenishment agent is (0.8-3):1. As an example, the ratio of a total surface area of the conductive agent to that of the lithium replenishment agent may be 0.1:1, 0.5:1, 0.8:1, 1.0:1, 1.2:1, 1.5:1, 1.8:1, 2.0:1, 2.5:1, 2.8:1, 3.0:1, 3.2:1, 3.5:1, 3.8:1, 4.0:1, 4.2:1, 4.5:1, 4.8:1, 5.0:1, 6.0:1, 8.0:1, or 9.0:1. The ratio between the surface areas of the two is controlled within the range mentioned above, so that dispersion and adsorption of the conductive agent on the surface of the lithium replenishment agent is increased, and cladding of the conductive agent over the particles of the lithium replenishment agent is further facilitated, thereby further reducing the resistivity of the lithium replenishment layer before/after delithiation. Meanwhile, the dispersion property of the conductive agent and the lithium replenishment agent can further be improved, and the mechanical strength of the lithium replenishment layer before/after delithiation can further be increased, which is beneficial for the cycle stability of the battery.

In an embodiment of the present disclosure, the total surface area of the conductive agent and that of the lithium replenishment agent can be tested by using a scanning laser particle size analyzer and a specific surface meter in combination, and then the ratio of their total surface areas is further calculated. Specifically, m grams of the material of the lithium replenishment layer is dispersed in a solvent to remove the binder potentially existing in the lithium replenishment layer. The obtained solid is washed and dried, and then the solid is weighed and recorded as m₁. A gas adsorption curve of the solid is determined by a gas adsorption and desorption instrument, and the specific surface area A m²/g of the material of the lithium replenishment layer is calculated in combination with a BET model. The total surface of the material of this part of lithium replenishment layer S=m₁*A in the unit of m². The particle size distribution curve of the lithium replenishment agent is obtained by placing said solid in the laser particle size analyzer and is integrated to obtain the total surface area S₁ m² of the lithium replenishment agent. Then the total surface area of the conductive agent S₂=S-S₁. Then the ratio of the total surface area of the conductive agent to that of the lithium replenishment agent is S₂/S₁.

It is further noted that said solvent includes, but is not limited, to at least one of N- methylpyrrolidone, N,N-dimethylformamide, ethanol, isopropanol, acetone, tetrahydrofuran, dimethylformamide, toluene or n-hexane. Choices can be made by those skilled in the art according to actual needs. The test conditions for the gas adsorption and desorption instrument include maintaining the gas desorption time ≥30 min and the gas desorption temperature ≥100°C during the test to obtain the gas adsorption and desorption curve of the solid to further obtain A. In addition, although the particle size distribution curves of the lithium replenishment agent and the conductive agent are measured at the same time by the laser particle size analyzer, the peaks of the particle size distribution curves of the lithium replenishment agent and the conductive agent can be clearly distinguished, as the particle size of the conductive agent is generally significantly smaller than that of the lithium replenishment agent.

An embodiment of the present disclosure further provides a positive electrode which includes a positive electrode material layer and the lithium replenishment assembly provided by embodiments of the present disclosure. The positive electrode material layer is provided on the surface of the lithium replenishment layer facing away from the current collector. The inert layer formed after delithiation of the lithium replenishment layer does not impede transport of the lithium ions in the positive electrode during charging and discharging. With the lithium replenishment assembly provided by embodiments of the present disclosure, the positive electrode not only has the lithium replenishment layer so that the energy density of the battery can be increased, but also can maintain low resistivity, so that the internal resistance of the battery can be reduced, which is beneficial for exertion of the battery performance. In addition, said lithium replenishment assembly can also increase the peeling strength of the positive electrode, which is beneficial for the structural stability of the positive electrode.

In an embodiment of the present disclosure, the lithium replenishment layer may be provided on one side surface of the current collector, in which case a positive electrode material layer is provided on the side surface of the lithium replenishment layer facing away from the current collector, and a positive electrode material layer may also be provided on the opposite side surface of the current collector. Alternatively, the lithium replenishment layer is provided on the two opposite side surfaces of the current collector, and the positive electrode material layer is provided on both side surfaces of the lithium replenishment layer.

In some embodiments of the present disclosure, in the lithium replenishment assembly of the positive electrode, the thickness of the current collector ranges from 7 µm to 20 µm; and the thickness of the lithium replenishment layer ranges from 1 µm to 15 µm. In some embodiments of the present disclosure, after rolling of the positive electrode, the thickness of the current collector ranges from 7 µm to 20 µm; and the thickness of the lithium replenishment layer ranges from 1 µm to 11 µm. As an example, after rolling, the thickness of the lithium replenishment layer may be 1 µm, 2 µm, 5 µm, 8 µm, or 10 µm. The thickness of the lithium replenishment layer here refers to the status after delithiation. It is further noted that in an embodiment of the present disclosure, in the rolled positive electrode, there is no obvious difference in the thicknesses of the lithium replenishment layer before and after delithiation.

In some embodiments of the present disclosure, the resistivity of the positive electrode at the room temperature ranges from1 Ω·m to 100 Ω·m. As an example, the resistivity of the positive electrode at the room temperature may be 1 Ω·m, 5 Ω·m, 10 Ω·m, 15 Ω·m, 20 Ω·m, 25 Ω·m, 30 Ω·m, 50 Ω·m, 60 Ω·m, 70 Ω·m, 80 Ω·m, 90 Ω·m, or 100 Ω·m. In an embodiment of the present disclosure, the resistivity of the positive electrode at the room temperature refers to the resistivity of the positive electrode as a whole after delithiation of the lithium replenishment layer, including the resistivity of the current collector, the lithium replenishment layer after delithiation, and the positive electrode material layer. The specific testing approach is similar to that of the resistivity of the lithium replenishment assembly after delithiation at the room temperature, except that it is unnecessary to remove the positive electrode material layer. In an embodiment of the present disclosure, the resistivity of the positive electrode at the room temperature is measured by using the two-electrode method.

In some embodiments of the present disclosure, in the positive electrode, the weight ratio of the lithium replenishment agent to the positive electrode active material is in the range of (0.2-10):100. As an example, the weight ratio of the lithium replenishment agent to the positive electrode active material may be 0.2:100,0.5:100, 0.8:100, 1:100, 1:50, 3:100, 1:25, 1:20, 3:50, 7:100, 2:25, or 9:100. By controlling the ratio of the two within said range, exertion of performance of the final battery is facilitated. The specific ratio may be selected by those skilled in the art according to actual needs.

An embodiment of the present disclosure further provides a secondary battery which includes the positive electrode provided by embodiments of the present disclosure. This secondary battery may be a liquid battery having an electrolyte or alternatively a solid battery. With the positive electrode of embodiments of the present disclosure, this secondary battery can have high energy density, long cycle life, as well as good rate performance.

In some embodiments of the present disclosure, said secondary battery includes a positive electrode sheet, a negative electrode sheet, and a separator and an electrolyte arranged between the positive electrode sheet and the negative electrode sheet. In an embodiment of the present disclosure, said negative electrode sheet is any negative electrode sheet well known in the art, which is not limited in the present disclosure.

It can be understood that the lithium replenishment agent is totally or partially delithiated during formation of the battery. In the subsequent charging and discharging cycle, the original lithium replenishment agent becomes a residue of the lithium replenishment agent, and the lithium replenishment layer also correspondingly becomes a material layer including the residue of the lithium replenishment agent and the conductive agent. In some embodiments, the lithium replenishment layer also correspondingly becomes a material layer including the residue of the lithium replenishment agent, the conductive agent, and the binder.

It can be understood that, after delithiation of the lithium replenishment agent, its particle size is correspondingly changed. Correspondingly, in some embodiments, the particle size of the residue of the lithium replenishment agent after delithiation ranges from 0.4 µm to 18 µm. As an example, the particle size of the residue of the lithium replenishment agent after delithiation may be 0.4 µm, 0.5 µm, 1.0 µm, 2.0 µm, 5.0 µm, 8.0 µm, 10.0 µm, 12.0 µm, 15.0 µm, 16 µm, 17 µm, or 18 µm.

An embodiment of the present disclosure further provides an electric device which includes the secondary battery provided by embodiments of the present disclosure. As the electric device is powered by using the secondary battery provided by embodiment of the present disclosure, the electric device has a long battery life and certain fast charge capability, thereby having good market competitiveness.

In some embodiments of the present disclosure, said electric device includes, but is not limited to, a 3C electronic device, a powered vehicle, an energy storage system, and the like. The powered vehicle includes, but is not limited to, a new energy vehicle, a power-assisted bicycle, and the like.

The technical solution of the present disclosure is to be further described below with several examples.

### Example 1

A lithium replenishment assembly includes a current collector and a lithium replenishment layer provided on a surface of the current collector. The current collector is an aluminum foil with a thickness of 15 µm, the thickness of the lithium replenishment layer is 10 µm, the lithium replenishment layer includes 75wt.% of lithium replenishment agent (specifically, Li₂NiO₂), 20wt.% of conductive agent (specifically, Super P), and 5wt.% of binder (specifically, polyvinylidene fluoride). The ratio of the surface area of the conductive agent to that of the lithium replenishment agent is 3, the D50 particle size of the lithium replenishment agent is 3.0 µm, and the particle size of the conductive agent ranges from 30 to 120 nm.

A positive electrode slurry is coated over the surface of the lithium replenishment assembly (i.e., the surface of the lithium replenishment layer facing away from the current collector) to obtain a positive electrode material layer which includes a positive electrode active material (specifically, lithium iron phosphate), a binder (specifically, PVDF), and a conductive agent (specifically, super-P) at a weight ratio of 100:3:2. The lithium replenishment assembly with the positive electrode material layer is rolled. After rolling, the lithium replenishment layer has a thickness of 5 µm.

After delithiation, the resistivity of the lithium replenishment assembly at the room temperature is 10 Ω·cm, and the weight ratio of the residue of the lithium replenishment agent after delithiation to the positive electrode active material is 1:20. The particle size D50 of the residue of the lithium replenishment agent after delithiation is 2.5 µm.

### Example 2

The difference from Example 1 lies in that: the lithium replenishment layer includes 90wt.% of lithium replenishment agent (specifically, Li₂NiO₂), 1wt.% of conductive agent (specifically, Super P), and 9wt.% of binder, and the weight ratio of the lithium replenishment agent after delithiationt to the positive electrode active material is 1: 16.7. The D50 particle size of the lithium replenishment agent is 3 µm, and the particle size of the conductive agent ranges from 30 to 120 nm.

The ratio of the surface area of the conductive agent to that of the lithium replenishment agent is 1, the resistivity of the lithium replenishment assembly after delithiation at the room temperature is 100 Ω·cm, and the weight ratio of the residue of the lithium replenishment agent after delithiation to the positive electrode active material is 1: 16.7. The particle size D50 of the residue of the lithium replenishment agent after delithiation is 2.5µm.

### Example 3

The difference from Example 1 lies in that: the lithium replenishment layer includes 79wt.% of lithium replenishment agent (specifically, Li₂NiO₂), 1wt.% of conductive agent (specifically, Super P), and 20wt.% of binder, and the D50 particle size of the lithium replenishment agent is 8 µm, and the particle size of the conductive agent ranges from 30 to 120 nm.

The ratio of the surface area of the conductive agent to that of the lithium replenishment agent is 0.8, the resistivity of the lithium replenishment assembly after delithiation at the room temperature is 500 Ω·cm, and the weight ratio of the residue of the lithium replenishment agent after delithiation to the positive electrode active material is 1: 19. The particle size D50 of the residue of the lithium replenishment agent after delithiation is 7.2 µm.

### Example 4

The difference from Example 1 lies in that: the lithium replenishment layer includes 90wt.% of lithium replenishment agent (specifically, Li₂NiO₂), 1wt.% of conductive agent (specifically, Super P), and 9wt.% of binder. The D50 particle size of the lithium replenishment agent is 0.5 µm, and the particle size of the conductive agent ranges from 30 to 120 nm.

The ratio of the surface area of the conductive agent to that of the lithium replenishment agent is 1.5, the resistivity of the lithium replenishment assembly after delithiation at the room temperature is 200 Ω·cm, and the weight ratio of the residue of lithium replenishment agent after delithiation to the positive electrode active material is 1: 16.7. The particle size of the residue of the lithium replenishment agent after delithiation is 0.45 µm.

### Example 5

The difference from Example 1 lies in that the conductive agent was replaced with graphite having a particle size ranging from 220 nm to 300 nm. The resistivity of the lithium replenishment assembly after delithiation at the room temperature is 150 Ω·cm.

### Example 6

The difference from Example 1 lies in that: the particle size of the conductive agent ranges from 30 to 120 nm, the D50 of the lithium replenishment agent is 20 µm, and the ratio of the surface area of the conductive agent to that of the lithium replenishment agent is 8:1; and the resistivity of the lithium replenishment assembly after delithiation at the room temperature is 4 Ω·cm. The particle size of the residue of the lithium replenishment agent after delithiation is 18 µm.

### Example 7

The difference from Example 1 lies in that: the D50 particle size of the lithium replenishment agent is 1 µm, the particle size of the conductive agent ranges from 20 to 100 nm, the ratio of the surface area of the conductive agent to that of the lithium replenishment agent is 10: 1; and the resistivity of the lithium replenishment assembly after delithiation at the room temperature is 3 Ω·cm. The particle size of the residue of the lithium replenishment agent after delithiation is 0.9 µm.

### Example 8

The difference from Example 1 lies in that: the D50 particle size of the lithium replenishment agent is 3 µm, the particle size of the conductive agent ranges from 20 to 100 nm, the ratio of the surface area of the conductive agent to that of the lithium replenishment agent is 2:1, and the resistivity of the lithium replenishment assembly after delithiation at the room temperature is 5 Ω·cm.

### Example 9

The difference from Example 1 lies in that: the thickness of the lithium replenishment layer before rolling is 30 µm; and the thickness of the lithium replenishment layer after rolling is 18 µm. The weight ratio of the residue of the lithium replenishment agent after delithiation to the positive electrode active material is 15:100. The resistivity of the lithium replenishment assembly after delithiation at the room temperature is 500 Ω·cm.

### Example 10

The difference from Example 1 lies in that: the thickness of the lithium replenishment layer before rolling is 3 µm; and the thickness of the lithium replenishment layer after rolling is 1 µm. The weight ratio of the lithium replenishment agent to the positive electrode active material is 0.8:100. The resistivity of the lithium replenishment assembly after delithiation at the room temperature is 200 Ω·cm.

### Example 11

The difference from Example 1 lies in that: the lithium replenishment layer includes 50wt.% of lithium replenishment agent (specifically, Li₂NiO₂), 40wt.% of conductive agent (specifically, Super P), and 10wt.% of binder. The weight ratio of the lithium replenishment agent after delithiation to the positive electrode active material is 2:100. The resistivity of the lithium replenishment assembly after delithiation at the room temperature is 4 Ω·cm.

### Example 12

The only difference from Example 1 lies in that the lithium replenishment agent was replaced with Li₂O₂. The resistivity of the lithium replenishment assembly after delithiation at the room temperature is 300 Ω·cm.

The following comparative examples are provided to highlight the beneficial effects of embodiments of the present disclosure.

### Comparative Example 1

The only difference from Example 1 lies in that: the lithium replenishment layer was replaced with a conductive layer which includes 80wt.% of conductive agent and 20% of binder, where the thickness of the conductive layer is 2 µm.

### Comparative Example 2

The only difference from example 1 lies in that: the lithium replenishment layer includes 74.5wt.% of lithium replenishment agent (specifically, Li₂NiO₂), 0.5wt.% of conductive agent (specifically, Super P), and 25wt.% of binder (specifically, polyvinylidene fluoride). The ratio of the specific surface area of the conductive agent to that of the lithium replenishment agent is 0.3, and the resistivity of the lithium replenishment assembly after delithiation at the room temperature is 2200 Ω·cm.

### Performance Test

(1) Preparation of the test battery: The positive electrodes of the various examples and comparative examples above were assembled respectively with the negative electrode sheets into test batteries, where the negative electrode sheet includes a current collector (specifically, a copper foil) and a negative electrode material layer provided on the surface of the current collector. The negative electrode material layer is composed of graphite, a conductive agent, and a binder at a weight ratio of 95:3:2. The electrolyte is an organic solution an organic solution containing 1.2 mol/L lithium hexafluorophosphate, where the solvent is EC:DMC:EMC at a weight ratio of 1:1:1. After formation, test batteries of the various examples and comparative examples were obtained. Formation process: The battery was charged at 0.05C for 3 hrs, allowed to stand for 10 min, and charged to 3.8 V at 0.2C.
(2) Rate performance test: The change in the discharge capacity of each battery with the number of cycles was tested at 25°C at various rates including 0.5C, 1C, 2C, and 3C at a voltage ranging from 2.5 V to 3.8 V In calculation of the capacity, the ratio of the discharge capacity to the weight of the positive electrode active material at a certain current density was regarded as the discharge capacity at this current density. Table 1 summarizes the ratio (3C/0.5C) of the first-cycle discharge capacity of each battery at 3C rate to that at 0.5C. Test results of the various batteries are summarized in Table 1.
(3) Cycle life: At 25±1°C, the battery was charged at 0.33C and discharged at 0.5CP for the charge and discharge cycle test. The steps were as follows. The battery was allowed to stand for 10 min; constant-current charged to 3.8 V at 0.5C, and then constant-voltage charged to 0.05C cut-off; allowed to stand for 10 min; and then constant-power discharged to 2.5V at 0.5CP. This was one cycle. These steps were repeated. The number of cycles when the capacity retention rate of the battery was 80%, that is, the cycle life of the battery, was determined.
(4) Energy density: In addition, the discharge curve in the charge-discharge curve obtained by constant-current charging and discharging each battery at 0.1C was integrated and divided by the first-cycle discharge capacity, to obtain the average voltage of each battery, that is, the charging and discharging voltage plateau. Then the gravimetric energy density of each battery was calculated according to the following formula:
Gravimetric energy density=graded capacity×average voltage plateau/battery weight, where the graded capacity refers to the discharge capacity at 0.1C as mentioned above. The results are summarized in Table 1.
(5) Internal DC resistance of the batteries: The internal DC resistance (DCIR) is the ratio of the voltage difference before and after discharge to the current after discharge at 2C for 30s in the 50% SOC status.
(6) Test of peeling strength from positive electrode: The test was carried out using a universal tensile tester. Each positive electrode was cut to a stripe with a width of 40 mm and a length ranging from 150 to 200 mm, and the peeling strength was tested at a peeling angle of 180.

**Table 1**

| Test No. | Resistivity of positive electrode at room temperature (Ω·m) | Cycle life (80% cut-off) | Energy density (Wh/kg) | 3C/0.5C | DCIR (Ω) | Peeling strength N/40 mm |
|---|---|---|---|---|---|---|
| Example 1 | 13.6 | 5100 | 209 | 94.5 | 122 | 0.68 |
| Example 2 | 14.3 | 4220 | 208 | 93.4 | 129 | 0.85 |
| Example 3 | 16.2 | 3890 | 199 | 92.1 | 131 | 0.96 |
| Example 4 | 15.5 | 3770 | 198 | 91.9 | 134 | 0.75 |
| Example 5 | 14.8 | 4590 | 203 | 92.3 | 128 | 0.72 |
| Example 6 | 12.6 | 3560 | 202 | 92.4 | 125 | 0.69 |
| Example 7 | 10.3 | 3400 | 207 | 93.4 | 124 | 0.45 |
| Example 8 | 14.5 | 4950 | 208 | 93.9 | 123 | 0.78 |
| Example 9 | 25.5 | 6890 | 176 | 90.3 | 138 | 0.43 |
| Example 10 | 16.8 | 3490 | 193 | 91.8 | 129 | 0.56 |
| Example 11 | 11.6 | 4580 | 204 | 92.6 | 126 | 0.72 |
| Example 12 | 34.2 | 3320 | 189 | 90.2 | 133 | 0.54 |
| Comparative Example 1 | 12.3 | 2090 | 183 | 90.1 | 136 | 0.65 |
| Comparative Example 2 | 42.1 | 3080 | 197 | 88.1 | 145 | 0.67 |

As can be seen from data in Table 1, the lithium replenishment assembly provided by embodiments of the present disclosure can be used to provide a battery having high energy density, cycle performance, and rate performance.

As discussed, embodiments can provide a lithium replenishment assembly comprising a current collector and a lithium replenishment layer provided on at least one side surface of the current collector; after delithiation of the lithium replenishment layer, the resistivity of the lithium replenishment assembly at room temperature ranging from 2 Ω·m to 2000 Ω·m.

The delithiation of the lithium replenishment layer may occur during the formation of a battery containing lithium replenishment assembly. The delithiation may be partial or total.

It will be appreciated that cause of the delithiation of the lithium replenishment layer may be that the lithium-rich lithium replenishment agent is voltage driven to delithiate at a high voltage during manufacturing.

The delithiation of the lithium replenishment layer increases the resistivity of the lithium replenishment assembly.

As discussed, after delithiation of the lithium replenishment layer, the resistivity of the lithium replenishment assembly at the room temperature ranges from 2 Ω·m to 2000 Ω·m. In this case, the resistivity of the lithium replenishment assembly before delithiation at room temperature may range from 1 Ω·cm to 500 Ω·cm.

The resistivity of the lithium replenishment assembly at the room temperature may range from 2 Ω·m to 1000 Ω·m. In this case, the resistivity of the lithium replenishment assembly before delithiation at room temperature may range from 1 Ω·cm to 300 Ω·cm.

The resistivity of the lithium replenishment assembly at the room temperature may range from 5 Ω·m to 800 Ω·m. In this case, the resistivity of the lithium replenishment assembly before delithiation at room temperature may range from 2 Ω·cm to 200 Ω·cm.

Exemplary embodiments of the present disclosure have been described above. It should be noted that several improvements and modifications can be made by those of ordinary skill in the art without departing from the principle of the present disclosure, which shall fall within the protection scope of the present disclosure.

## Claims

1. A lithium replenishment assembly comprising a current collector and a lithium replenishment layer provided on at least one side surface of the current collector; after delithiation of the lithium replenishment layer, the resistivity of the lithium replenishment assembly at room temperature ranging from 2 Ω·m to 2000 Ω·m.

2. The lithium replenishment assembly according to claim 1, wherein the resistivity of the lithium replenishment assembly after delithiation at room temperature ranges from 2 Ω·m to 1000 Ω·m.

3. The lithium replenishment assembly according to claim 1 or 2, wherein the thickness of the current collector ranges from 7 µm to 20 µm; and the thickness of the lithium replenishment layer ranges from 3 µm to 20 µm.

4. The lithium replenishment assembly according to any one of claims 1 to 4, wherein the lithium replenishment layer comprises a lithium replenishment agent, a conductive agent, and a binder, and the content by weight of the lithium replenishment agent ranges from 50% to 90%, the content by weight of the conductive agent ranges from 1% to 40%, and the content by weight of the binder ranges from 1% to 20%, based on the total weight of the lithium replenishment layer.

5. The lithium replenishment assembly according to any one of claims 1 to 4, wherein the lithium replenishment layer comprises a lithium replenishment agent, and the particle size D50 of the lithium replenishment agent ranges from 0.5 µm to 20 µm.

6. The lithium replenishment assembly according to any one of claims 1 to 5, wherein the lithium replenishment layer comprises a lithium replenishment agent, and the lithium replenishment agent comprises at least one LiₓA_{y} and/or metal oxide of lithium, where x>0, 0<y≤3, and the element A comprises at least one of C, N, O, P, and S;
the metal oxide of lithium comprises at least one of Li₂M¹O₂, Li₂M²O₃, Li₅FeₐM³₁₋ₐO₄, Li₆Mn_{b}M⁴_{1-b}O₄, and Li₅M⁵O₄, where M¹ comprises at least one of Ni, Mn, Cu, Fe, Cr, and Mo; M² comprises at least one of Ni, Mn, Fe, Mo, Zr, Si, Cu, Cr, and Ru; M³ comprises at least one of Al, Nb, Co, Mn, Ni, Mo, Ru, and Cr, and 0≤a≤1; M⁴ comprises at least one of Ni, Fe, Cu, and Ru, and 0≤b≤1; and M⁵ comprises at least one of Ni, Mn, Fe, Mo, Zr, Si, Cu, and Cr.

7. The lithium replenishment assembly according to any one of claims 1 to 6, wherein the lithium replenishment layer comprises a conductive agent, and the size of the conductive agent in at least one dimension is less than or equal to 200 nm.

8. The lithium replenishment assembly according to any one of claims 1 to 7, wherein the lithium replenishment layer comprises a conductive agent, and the conductive agent comprises at least one of porous carbon, acetylene black, carbon nanotubes, carbon black, ketjen black, graphene, and Mxenes.

9. The lithium replenishment assembly according to any one of claims 1 to 8, wherein the lithium replenishment layer comprises a binder, and the binder comprises at least one of polyvinylidene fluoride, polyvinyl alcohol, polytetrafluoroethylene, polyethylene, polypropylene, polyacrylonitrile, polyacrylic acid, sodium alginate, and styrene-butadiene rubber.

10. The lithium replenishment assembly according to any one of claims 1 to 9, wherein the particle size D50 of a residue of the lithium replenishment agent after delithiation ranges from 0.4 µm to 18 µm.

11. The lithium replenishment assembly according to any one of claims 1 to 10, wherein the ratio of a total surface area of the conductive agent to that of the lithium replenishment agent is in the range of (0.1-10): 1; optionally, the ratio of a total surface area of the conductive agent to that of the lithium replenishment agent is in the range of (0.5-5): 1; and optionally, the ratio of a total surface area of the conductive agent to that of the lithium replenishment agent is in the range of (0.8-3): 1.

12. A positive electrode comprising the lithium replenishment assembly according to any one of claims 1 to 11 and a positive electrode material layer, the positive electrode material layer provided on a surface of the lithium replenishment layer facing away from the current collector;
optionally wherein after delithiation of the lithium replenishment layer, the thickness of the lithium replenishment layer ranges from 1 µm to 15 µm;
optionally wherein the positive electrode material layer comprises a positive electrode active material, and the weight ratio of the lithium replenishment agent to the positive electrode active material is in the range of (0.2-10): 100.

13. A secondary battery comprising the positive electrode according to claim 12.

14. The secondary battery according to claim 13, wherein the resistivity of the positive electrode at room temperature ranges from 1 Ω·m to 100 Ω·m.

15. An electric device comprising the secondary battery according to claim 13 or 14.
